# EUROPÄISCHE PATENTSCHRIFT

(11) **EP 3 426 731 B1**
(45) Veröffentlichungstag und Bekanntmachung des Hinweises auf die Patenterteilung: **12.05.2021**
(21) Anmeldenummer: 17708739.2
(22) Anmeldetag: 02.03.2017
(51) Int. Cl.: C09D 5/00

(54) **HALOGENFREIE, DÄMMSCHICHTBILDENDE BRANDSCHUTZBESCHICHTUNG SOWIE DEREN VERWENDUNG**
HALOGEN-FREE, INTUMESCENT FIRE-PROOF COATING, AND USE THEREOF
REVÊTEMENT IGNIFUGE FORMANT UNE COUCHE ISOLANTE ET EXEMPT D'HALOGÈNE ET UTILISATION DUDIT REVÊTEMENT

(30) Priorität: 10.03.2016 DE 102016203911
(43) Veröffentlichungstag der Anmeldung: 16.01.2019
(73) Patentinhaber: Clariant International Ltd, 4132 Muttenz (CH)
(72) Erfinder: BENDER, Klaus, 52391 Vettweiß (DE); ZURSTRASSEN, Andrea, 50374 Erftstadt (DE); SICKEN, Martin, 51149 Köln (DE)
(74) Vertreter: Jacobi, Carola
(86) Internationale Anmeldenummer: PCT/EP2017/054842
(87) Internationale Veröffentlichungsnummer: WO 2017/153227

(56) Entgegenhaltungen:
- EP-A2- 2 541 105
- WO-A1-2005/037918
- CN-A- 101 508 874
- CN-A- 102 518 003
- CN-A- 103 231 890
- DE-A1-102008 064 012

## Beschreibung

Dämmschichtbildende Brandschutzbeschichtungen, auch Intumeszenzbeschichtungen genannt, zeichnen sich dadurch aus, dass sie im Brandfall unter entsprechender Temperatureinwirkung aufschäumen und durch dieses Aufschäumen der vorgenannten Brandschutzbeschichtung der Wärmedurchtritt auf Decken, Stahlkonstruktionen, Wände, Kabel, Rohre und anderen Materialen verhindert oder zumindest eine Zeitlang behindert wird.

Die US-A-49652961 beschreibt ein flammhemmendes Material, das sich aus einem flammhemmenden Beschichtungsmaterial und einem elektrisch leitfähigen Material zusammensetzt. Das flammhemmende Beschichtungsmaterial besteht hier aus schaum- und kohlenstoff-bildenden Substanzen, einer gaserzeugenden Verbindung, einem filmbildenden Bindemittel, entsprechenden Lösemitteln und gegebenenfalls weiteren Inhaltsstoffen.

Die DE1008064012A1 beschreibt Addukte von Alkylphosphonigsäurederivaten und diesterbildenden Olefinen, deren Säuren, Ester und Salze oder Mischungen davon. Hier wird die Aufgabe gelöst, solche Addukte und halogenfreie Verfahren zu deren Herstellung zur Verfügung zu stellen, bei dem sich auf besonders einfache und wirtschaftliche Art und Weise sowie in entsprechend hohen Ausbeuten die gewünschten Addukte dieser Art herstellen lassen. Die Addukte sind leicht zugänglich und halogenfrei und können unter anderem für Klarlacke und Intumeszenzbeschichtungen verwendet werden.

CN101508874A1 beschreibt ein halogenfreies flammhemmendes Acetatfasergewebeband, das ein Acetatgewebesubstrat und eine darauf aufgebrachte Haftkleberschicht umfasst, wobei der Haftklebstoff ausgewählte Gewichtskomponenten umfasst und nur geringe Mengen an Flammschutzmittel enthalten soll.

In der CN103231890A1 wird ein laminiertes, flammhemmendes Förderband aus mehreren Schichten mit einer flammhemmende Randschicht, einer flammhemmenden Bindeschicht und einer flammhemmende Zwischenhaftschicht beschrieben. Hierbei sollen Nachteile, wie etwa die schlechte Haftung der Verbindungsgrenzfläche zwischen dem Abdeckgummi und dem Gerüstmaterial des Förderbands, verbessert oder vermieden werden. Entsprechend wird ein
laminiertes flammhemmendes Förderband zur Verfügung gestellt, welches flammhemmende Segeltuchschichten, eine flammhemmende Zwischenklebeschicht, obere und untere flammhemmende Abdeckgummischichten und eine Randgummischicht aufweist, die auf bestimmte Art und Weise, miteinander verbunden sind.

Die EP2541105A2 beschreibt eine Klebefolie mit einer Klebstoffzusammensetzung das ein Flammschutzmittel sowie Kleber etc. enthält und das eine Dichtung mit ausreichend hoher Flammhemmung zur Verfügung stellt. Insbesondere soll hier
ein Eindringen von Feuchtigkeit in ein Flugzeug verhindert werden, etwa dort, wo eine Antenne in die Außenhaut eines Flugzeuges eingebaut ist.

Gelöst wird diese Aufgabe durch den Einsatz einer halogenfreien, flammhemmenden Klebefolie, die ein Verzögerungsmittel enthält und eine halogenhaltige Klebeschicht aufweist.

In der CN102518003A1 wird ein Herstellungsverfahren für ein halogenfreies flammhemmendes Polyester-Etikettenpapier beschrieben mit dem solche Papiere auf besonders einfache Art und Weise hergestellt werden können.

Die WO2005/037919A1 beschreibt eine gefüllte weiche halogenfreie flammwidrige Wickelfolie aus mindestens zwei verschiedenen Polymeren, wobei die Wickelfolie aus mindestens drei verschiedenen Komponenten besteht, wovon eins ein anorganisches Flammschutzmittel ist. Damit weist diese Wickelfolie ausreichende Wärmebeständigkeit, Verträglichkeit mit Polyolefinkabelisolierung und Abrollkraft auf.

In der US-A-4879320 wird eine der in der US-A-49652961 beschriebenen ähnliche flammhemmende Zusammensetzung beansprucht, der jedoch anstelle eines leitfähigen Materials ein keramisches Fasermaterial zugesetzt ist.

Die US-A-5225464 beschreibt eine wässrige Intumeszenz-Formulierung auf Basis eines Reaktionsproduktes aus Phosphorsäure, Melamin und Monoammoniumphosphat, das mit Pentaerythritol, chlorierten Kohlenwasserstoffen und weiteren Verbindungen, insbesondere Polyvinylacetat, ein verbessertes Intumeszenz-Beschichtungsmaterial liefern soll.

Zahlreiche intumeszierende Formulierungen sind aus dem "Fire Retardants Formulations Handbook" (Autor: Vijay Mohan Bhatnagar, 1972) bekannt.

Die DE-A-4343668 schließlich beschreibt aufblähbare, flammhemmende Überzugsmassen, aus mindestens
4 bis 25 Gew.-% eines filmbildenden Bindemittels,
10 bis 40 Gew.-% Ammoniumpolyphosphat,
8 bis 40 Gew.-% einer bei Hitzeeinwirkung kohlenstoffbildenden Substanz,
6 bis 25 Gew.-% eines Treibmittels,
0 bis 5 Gew.-% Dispergier Additiv,
0 bis 25 Gew.-% Füllstoffe.

Nachteilig bei den vorgenannten lösemittelhaltigen Brandschutzbeschichtungen nach dem Stand der Technik ist insgesamt, dass sie halogenhaltig sind und als Bindemittel verschiedenartige Ester auf Basis von Mineralölderivaten verwenden und dass die Beschichtungen aufgrund ihrer inhärenten Porosität eine schlechte Witterungsbeständigkeit aufweisen.

Der vorliegenden Erfindung liegt daher die Aufgabe zugrunde, Brandschutzbeschichtungen zur Verfügung zu stellen, die ein filmbindendes Bindemittel auf natürlicher Rohstoffbasis enthalten und nicht auf die Verwendung von halogenhaltigen Komponenten wie etwa Chlorparaffin angewiesen sind.

Brandschutzbeschichtungen sind hochgefüllte Formulierungen reaktiver Bestandteile mit einer Pigment-Volumen-Konzentration (PVK) - dem Volumenverhältnis zwischen Pigmenten/Füllstoffen und dem Bindemittel in der ausgehärteten Beschichtung - im überkritischen Bereich (KPVK).

Unterhalb der KPVK, bei den unterkritischen Formulierungen sind die Oberflächen vollständig belegt. Es existieren nur Grenzflächen zwischen Pigment/Füllstoff und Bindemittel.

Erhöht man den Pigmentanteil an der Formulierung weiterhin, befindet man sich oberhalb der KPVK. Bei diesen überkritischen Formulierungen sind die Oberflächen nicht vollständig belegt. Zusätzlich zur Grenzfläche zwischen Pigment/Füllstoff und Bindemittel kommen weitere Grenzflächen zwischen Pigment/Füllstoff und Luft hinzu, mit dem Nachteil, dass an der Grenzfläche zwischen Pigment und Luft das Pigment nicht mehr durch das Bindemittel und die darin ggf. enthaltenen Additive geschützt ist. Dadurch wird die Witterungsstabilität der Beschichtung deutlich verschlechtert.
Forciert wird dies durch das mögliche Eindringen von Wasser in die Poren.

Überraschenderweise wurde nun gefunden, dass die erfindungsgemäßen Brandschutzbeschichtungen mit Bindemitteln auf der Basis von Terpenen und/oder Polyterpenen sich positiv auf die Bewitterungsstabilität auswirken, selbst wenn der Bereich der KPVK erreicht ist.

Darüber hinaus kann die Verwendung von Chlorparaffin als Weichmacher und Blähmittel unterbleiben, ohne dass dies negative Auswirkungen auf die Brandschutzeigenschaften hat.

Die Erfindung betrifft daher eine halogenfreie, dämmschichtbildende Brandschutzbeschichtung dadurch gekennzeichnet, dass sie halogenfreie, dämmschichtbildende Brandschutzbeschichtung, dadurch gekennzeichnet, dass 5 bis 69,7 Gew.-% filmbildendes Bindemittel auf Basis von Terpenen und/oder Polyterpenen,
5 bis 25 Gew.-% Melamin, Guanidin, deren Salze, Melaminkondensationsprodukte und/oder Dicyandiamide als Treibmittel,
5 bis 40 Gew.-% Ammoniumsalze von Phosphorsäuren und/oder Polyphosphorsäuren als schaumbildende Substanz,
5 bis 25 Gew.-% Kohlenhydrate als kohlenstoffbildende Substanz,
5 bis 40 Gew.-% Glasfasern, Mineralfasern, Kaolin, Talkum, Aluminiumoxid, Aluminiumhydroxid, Magnesiumhydroxid, Fällungskieselsäuren, Silikate und/oder pulverisierte Cellulosen als Hilfs- und Zusatzstoffe,
0,2 bis 10 Gew.-% Verdicker,
0,1 bis 10 Gew.-% Dispergieradditive und
10 bis 40 Gew.-% Lösungsmittel und/oder Lösungsmittelgemische enthält, wobei die Summe der Komponenten 100 Gew.-% beträgt.

Bevorzugt handelt es sich bei den Terpenen um Terpene an sich oder um Mischungen von Terpenen mit anderen Substanzen, wie Terpen-Phenol-Harze, Terpen-Kohlenwasserstoffharze, vinylaromatische Terpen-Harze, Kolophoniumharze und deren Ester.

Bevorzugt handelt es sich bei den Polyterpenen um synthetische und/oder natürliche Polyterpene, um Polyterpenharze, um Rosinester-Harze, ganz oder teil-hydrierte Rosinester-Harze, maleinisierte Derivate von Rosinesterharzen, disproportionierte Derivate, Abietinester und/oder modifizierte Naturharze.

Bevorzugt enthält das filmbildende Bindemittel weiterhin mindestens ein Kohlenwasserstoffharz, ein vinylaromatisch modifiziertes Kohlenwasserstoffharz, modifizierte Terpen-Harze, Terpen-Co- oder Terpolymere, Styrol-Terpene, α-Methyl-Styrol-Terpene, Phenol-modifizierte Terpen-Harze sowie hydrierte Derivate davon, Styrol-Harze, Phenol-modifizierte α-Methyl-Styrol-Harze, Acrylsäure-Copolymerisate, Styrol-Acrylsäure-Copolymere, und aromatische, aliphatische oder cycloaliphatische Kohlenwasserstoffharze vom Typ C₅, C₉, C₉/C₁₀ sowie deren modifizierte oder hydrierte Derivate.

Bevorzugt entstammen die Polyterpene aus α-Pinen, β-Pinen, Limonen, Dipenten, α-Phellandren, β-Phellandren, δ-3-Caren und/oder δ-2-Caren, α-Terpinen, β-Terpinen, Gamma-Terpinen, Sylvestren, α-Terpinolen, Psilimonen, Isolimonen, 1-Menthen, cis-2-Menthen, trans-2-Menthen, 3-Menthen, 4(8)-p-Menthene oder Mischungen davon, aus ungesättigten zyklischen und/oder ungesättigten linearen Terpen, entstammen.

Bevorzugt handelt es sich bei den ungesättigten zyklischen Terpenen um Camphen, Tricyclen, Cadinen, Caryophyllen und/oder Bornylen und bei den gesättigten linearen Terpenen um Allo-Ocimen, Citronellen, Pseudocitronellen, Ocimen und/oder Mycren.

Bevorzugt enthalten die Polyterpenharze mindestens einen Rest aus der Gruppe α-Pinen, β-Pinen, Limonen, Dipenten, α-Phellandren, β-Phellandren, δ-3-Caren, δ-2-Caren, α-Terpinen, β-Terpinen, Gamma-Terpinen, Sylvestren, α-Terpinolen, Psilimonen, Isolimonen, 1-Menthen, cis-2-Menthen, trans-2-Menthen, 3-Menthen, 4(8)-p-Menthen, Camphen, Tricyclen, Cadinen, Caryophyllen, Bornylen, Allo-Ocimen, Citronellen, Pseudocitronellen, Ocimen und/oder Mycren.

Bevorzugt enthalten die Polyterpenharze weiterhin mindestens einen monomeren Rest aus der Gruppe Isobutylen, 1-Alken, 2-Alken, trisubstituiertes Alken, Vinylcyclohexen, Piperylen, Isopren, 2-Methyl-2-buten, 2-Methyl-1-buten, Cyclopenten, acyclisches Penten, Cyclopentadien und/oder Dicyclopentadien.

Bevorzugt enthalten die Terpen-Phenol-Harze mindestens einen monomeren Rest aus der Gruppe aus α-Pinen, β-Pinen, δ-3-Caren und/oder Limonen und mindestens einen monomeren Rest aus der Gruppe Styren, Inden, α-Methylstyren, aromatisches Alkylstyren, Divinylbenzen, Divinylbenzen mit einer oder mehr Alkylgruppen, Isobutylen, Diisobutylen, 1-Alken, 2-Alken, trisubstituiertes Alken, Vinylcyclohexen, Piperylen, Isopren, 2-Methyl-2-buten, 2-Methyl-1-buten, Cyclopenten, acyclisches Penten, Cyclopentadien und/oder Dicyclopentadien und bei dem Phenol handelt es sich um Phenol selbst, mono-, di- und/oder trisubstituiertes Phenol und/oder eine hydroxylsubstituierte Naphthalinverbindung.

Bevorzugt handelt es sich bei den Terpen-Kohlenwasserstoff-harzen um α-Pinen, β-Pinen und/oder Delta-Limonen.

Bevorzugt handelt es sich bei den vinylaromatisch modifizierten Kohlenwasserstoffharzen um Phenylethen (Cinnamol).

Bevorzugt enthält die erfindungsgemäße Brandschutzbeschichtung filmbildende Bindemittel, Treibmittel, im Brandfall schaumschichtbildende und kohlenstoffbildende Substanzen sowie Hilfs- und Zusatzstoffe, Verdicker, Dispergieradditive und Lösungsmittel.

Bevorzugt enthält das filmbildende Bindemittel weiterhin ein organisches Polymerharz, wobei es sich hierbei um Copolymerisate auf Basis Styrol und Acrylsäureester, um Copolymerisate auf Basis Acrylsäureester, um Vinyltoluol/Acrylat-Copolymer, um Styrol/Acrylat-Polymer, um Homopolymerisate auf Basis Vinylacetat, um Copolymerisate auf Basis Vinylacetat, Ethylen und Vinylchlorid, um Copolymerisate auf Basis Vinylacetat und dem Vinylester einer langkettigen, verzweigten Carbonsäure, um Copolymerisate auf Basis Vinylacetat und Maleinsäure-di-n-Butylester und/oder Acrylsäureester, um Vinyl/Acrylat-Copolymer, um selbstvernetzende Polyurethan-Dispersionen und/oder Mischungen davon handelt.

Bevorzugt handelt es sich bei den Treibmitteln um Melaminphoshat, Dimelaminphosphat, Pentamelamintriphosphat, Trimelamindiphosphat, Tetrakismelamintriphosphat, Hexakismelaminpentaphosphat, Melamindiphosphat, Melamintetraphosphat, Melaminpyrophosphat, Melaminpolyphosphate, Melampolyphosphate, Melempolyphosphate, Melonpolyphosphate, Melamincyanurat, Melaminborat, Melaminsilikat, Melam, Melem, Melon, Guanidinphosphat, oligomere Ester des Tris(hydroxyethyl)isocyanurats mit aromatischen Polycarbonsäuren, Benzoguanamin, Tris(hydroxyethyl)-isocyanurat, Allantoin, Glycouril, und/oder Harnstoffcyanurat.

Bevorzugt enthält die erfindungsgemäße Brandschutzbeschichtung als schaumbildende Substanzen Ammoniumsalze von Phosphorsäuren und/oder Polyphosphorsäuren, wobei es sich dabei um stickstoffhaltige Phosphate (Ammoniumpolyphosphate) der Formeln (NH₄)_{y}H_{3-y}PO₄ bzw. (NH₄PO₃)_{z}, mit y gleich 1 bis 3 und z gleich 1 bis 10.000 handelt.

Bevorzugt weist das Ammoniumpolyphosphat eine Kristallform der Phase I, II, III, IV, V oder VI oder Mischungen davon auf.

Bevorzugt ist das Ammoniumpolyphosphat mit organofunktionellen Silanen, Melamin-Formaldehydharzen, sowie Emulsionen auf Basis von (Meth)-acrylatharzen, von Styrol/Acrylate Copolymeren, Urethanen, von Ethylen/Vinylacetate Copolymeren, von Gummi oder Mischungen davon mikroverkapselt.

Bevorzugt werden als Kohlenhydrate Pentaerythrit, Dipentaerythrit, Tripentaerythrit und/oder Polykondensate des Pentaerythrits eingesetzt.

Besonders bevorzugt enthält die erfindungsgemäße Brandschutzbeschichtung
8 bis 51,4 Gew.-% filmbildendes Bindemittel,
6 bis 20 Gew.-% Treibmittel,
15 bis 35 Gew.-% schaumbildende Substanz,
6 bis 20 Gew.-% kohlenstoffbildende Substanz,
5 bis 20 Gew.-% Hilfs- und Zusatzstoffe,
0,5 bis 8 Gew.-% Verdicker,
0,1 bis 8 Gew.-% Dispergieradditive und
14 bis 40 Gew.-% Lösungsmittel und/oder Lösungsmittelgemische, wobei die Summe der Komponenten 100 Gew.-% beträgt.

Insbesondere bevorzugt enthält die erfindungsgemäße Brandschutzbeschichtung 10 bis 36,1 Gew.-% filmbildendes Bindemittel,
7 bis 12 Gew.-% Treibmittel,
20 bis 30 Gew.-% schaumbildende Substanz,
8 bis 10 Gew.-% kohlenstoffbildende Substanz,
7 bis 10 Gew.-% Hilfs- und Zusatzstoffe,
1 bis 5 Gew.-% Verdicker,
0,8 bis 3 Gew.-% Dispergieradditive und
21 bis 35 Gew.-% Lösungsmittel und/oder Lösungsmittelgemische, wobei die Summe der Komponenten 100 Gew.-% beträgt.

Die Erfindung betrifft auch die Verwendung der erfindungsgemäßen Brandschutzbeschichtung zum Beschichten von Stahlkonstruktionen wie Stahlträgern und -Stützen, Decken, Wände, Kabel, Rohre, Leitungskanäle, Kabel- und Kombischotts, Türen, Vorhänge, Rauchschürzen, Jalousien, Sicherheitsschränke, Installationsschränke und anderen.

Die Erfindung betrifft insbesondere die Verwendung der erfindungsgemäßen Brandschutzbeschichtung auf Stahl, Holz, Holzwerkstoffen, Papier, Mineralwolle, Gipskarton, Kunststoffen, Metallen, Legierungen, Geweben aus synthetischen oder natürlichen Fasern und anderen geeigneten Materialien und/oder als Lötstopplack und für elektrische Schaltungen und Schaltkreise.

Die erfindungsgemäße Brandschutzbeschichtung ist sehr gut für den konstruktiven Brandschutz von Hohl- und H-profilen, sowie in der Werkstattapplikation und in Bereichen geeignet, in denen eine erhöhte Bewitterungsstabilität gefordert ist.

Bei Polyterpenen handelt es sich um natürliche z. B. in Citrusfrüchten oder Baumharzen vorkommende Isoprenoide Verbindungen, aufgebaut aus C₅-Bausteinen (aktives Isopren).

Man unterscheidet Hemiterpene (C₅) bis Tetraterpene (C₄₀). Höherpolymere Einheiten > C₄₀ werden als Polyterpene bezeichnet und kommen u. a. in Naturkautschuk und Guttapercha vor.

Beispiele für Polyterpene:

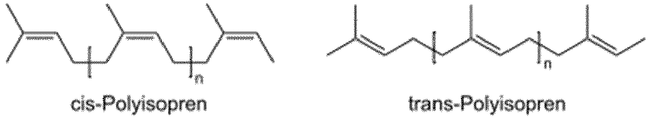

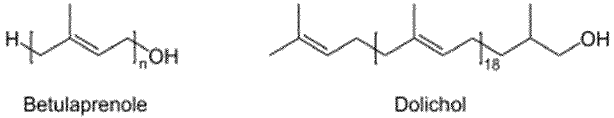

Durch Polymerisation mit anderen geeigneten Monomeren können für den jeweiligen industriellen Anwendungszweck maßgeschneiderte Polyterpen-Harze hergestellt werden.

Das in der erfindungsgemäßen Brandschutzbeschichtung eingesetzte filmbildende Bindemittel kann aus der Gruppe Polyterpen-Harz, Terpen-Phenol-Harz, Terpen-Kohlenwasserstoffharz, vinylaromatisches Terpen-Harz, Kohlenwasserstoffharz und/oder vinylaromatisch-modifizierten Kohlenwasserstoffharz entstammen.

Bevorzugt werden Polyterpen-Harze eingesetzt.

Hierbei besonders bevorzugt sind Polyterpenharze mit einem Erweichungspunkt von 10 °C bis 150 °C und ganz besonders bevorzugt sind Polyterpenharze mit einem Erweichungspunkt von 110 °C bis 130 °C.

Das Polyterpen-Harz kann mindestens einen monomeren Rest ausgewählt aus der Gruppe α-Pinen, β-Pinen, Limonen, Dipenten, β-Phellandren, δ-3-Caren und δ-2-Caren umfassen.

Bevorzugt werden solche aus α-Pinen, β-Pinen und/oder Limonen eingesetzt. Besonders bevorzugt werden Polyterpenharze eingesetzt die aus α-Pinen bestehen.

Bevorzugte Rohstoffe für erfindungsgemäß einsetzbare Polyterpenharze sind α- und β-Pinene, die etwa aus ätherischen Ölen von Myrte, Fichtennadeln, Dill, Fenchel, Koriander und Kümmel gewonnen werden.

δ-Pinen wird bevorzugt aus Rosmarin gewonnen.

Die bedeutendste natürliche Quelle für monoterpenoide Rohstoffe ist Kiefernharz.

Terpentinöl besteht zu etwa 60 % aus α-Pinen.

(+)-α-Pinen wird z. B. aus griechischem, (-)-α-Pinen aus spanischem Terpentinöl isoliert.

Bevorzugt ist die dämmschichtbildende Brandschutzbeschichtung gemäß der Erfindung halogenfrei.

Die erfindungsgemäße Brandschutzbeschichtung (Intumeszenzbeschichtung) gelangt in Form eines streich-, spritz- oder rollfähigen Anstrichmittels zum Schutz von unterschiedlichsten Untergründen zum Einsatz.

Die eingangs genannten Mengen an filmbildendem Bindemittel, Treibmittel, schaumbildender Substanz, kohlenstoffbildender Substanz, Hilfs- und Zusatzstoffen, Verdicker, Dispergieradditiven und Lösungsmittel und/oder Lösungsmittelgemischen können als Rezepturen im erfindungsgemäßen Herstellungsverfahren für eine Zusammensetzung als dämmschichtbildende Brandschutzbeschichtung eingesetzt werden.

Im praktizierten Herstellungsverfahren kann ein Polyterpenharz als Bindemittel mit einem im Brandfall schaumbildenden Mittel und optionalen weiteren Hilfs- und Zusatzstoffen in einem hochscherenden Dissolver vermischt werden.

Für eine schnelle und zuverlässige Dispergierung der Feststoffe sind geringe Teilchengrößen bevorzugt.

Bevorzugt sind mittlere Teilchengrößen d₅₀ von
Ammoniumpolyphosphat 0,02 - 1000 µm,
kohlenstoffbildende Substanz 0,02 - 900 µm,
Treibmittel 0,02 - 900 µm,
Dispergier Additiv 0,02 - 900 µm,
Füllstoffe und Pigmente 0,02 - 900 µm.

Besonders bevorzugt sind mittlere Teilchengrößen d₅₀ von
Ammoniumpolyphosphat 0,1 - 30 µm,
kohlenstoffbildende Substanz 0,1 - 50 µm,
Treibmittel 0,1 - 50 µm,
Dispergier Additiv 0,1 - 80 µm,
Füllstoffe und Pigmente 0,1 - 125 µm.

Die Erfindung wird durch die nachstehenden Beispiele in nicht einschränkender Weise erläutert.

In den Beispielen wurden folgende Produkte eingesetzt:
Pliolite® AC 80 (Omnova-Solutions/Frankreich)
Es handelt sich um ein newtonsches, thermoplastisches Harz auf Basis von Styrol-Acrylat-Copolymeren.

Piccolyte® A125 (Pinova, Inc., Brunswick, Georgia, USA)
Es handelt es sich um ein inertes, thermoplastisches Polyterpenharz auf Basis von Alpha-Pinen mit einem Mₙ (Zahlenmittel des Molekulargewichts) von 725, einem Schmelzpunkt von 122 - 128 °C und einem Flammpunkt >175 °C.

Piccolyte® C125 (Pinova, Inc., Brunswick, Georgia, USA)
Es handelt es sich um ein inertes, thermoplastisches Polyterpenharz auf Basis von Delta-Limonen mit einem Mₙ von 650, einem Schmelzpunkt von 122 - 128 °C und einem Flammpunkt von 241 °C.

Piccolyte® S125 (Pinova, Inc., Brunswick, Georgia, USA)
Es handelt es sich um ein inertes, thermoplastisches Kohlenwasserstoff-Harz auf Basis von Beta-Pinen mit einem Mₙ von 690, einem Schmelzpunkt von 122 - 128 °C und einem Flammpunkt >175 °C.

Sylvares® TR 90 (Arizona Chemicals, USA)
Es handelt es sich um ein Polyterpenharz auf Basis von Alpha-Pinen mit einem Mₙ von 580, einem Schmelzpunkt von 90 °C und einer Glasübergangstemperatur (TG) von 40 °C.

Sylvares® TR 105 (Arizona Chemicals, USA)
Es handelt es sich um ein Polyterpenharz auf Basis von Beta-Pinen mit einem Mₙ von 620, einem Schmelzpunkt von 105 °C und einer TG von 55 °C.

Sylvares® TR B115 (Arizona Chemicals, USA)
Es handelt es sich um ein Polyterpenharz auf Basis von Alpha-Pinen mit einem Mₙ von 1150, einem Schmelzpunkt von 115 °C und einer TG von 70 °C.

Sylvares® TR 7115 (Arizona Chemicals, USA)
Es handelt es sich um ein Polyterpenharz auf Basis von Alpha-Pinen mit einem Mₙ von 650, einem Schmelzpunkt von 105 °C und einer TG von 70 °C.

Exolit® AP 422 (Clariant Produkte (Deutschland) GmbH, Frankfurt am Main)
Es handelt sich um ein freifließendes, pulverförmiges, in Wasser schwer lösliches Ammoniumpolyphosphat der Formel (NH₄PO₃)ₙ mit n = 20 bis 1000, insbesondere 500 bis 1000. Der Anteil der Teilchen mit einer Teilchengröße kleiner 45 µm beträgt mehr als 99 %.

Exolit® AP 462 (Clariant Produkte (Deutschland) GmbH, Frankfurt am Main) Mikroverkapseltes Ammoniumpolyphosphat auf Basis Exolit® AP 422, das etwa 1,0 Masse-% Kapselmaterial aus einem gehärteten Melamin/Formaldehyd-Harz, enthält.

Disperbyk® -2163 (BYK, Wesel)
Dispergier Additiv

(Luvotix® PA 20 XA (Lehmann & Voss & Co., Hamburg)
Thixotropiermittel

Die Intumeszenzformulierungen - die dann später als Brandschutzbeschichtung aufgetragen werden - wurden wie folgt hergestellt:
a) Das Lösungsmittel bzw. die Lösungsmittelmischung wird bei Raumtemperatur vorgelegt und das jeweilige Harz unter Rühren darin gelöst, dann Lackadditive wie Dispergieradditive und ggf. Entschäumer unter Verrühren zugefügt,
b) schaumbildende Substanz, Treibmittel und kohlenstoffbildende Substanz sowie Hilfs- und Zusatzstoffe (z. B. Titandioxid, Fasern und Füllstoffe) unter Rühren mit niedriger Drehzahl eingestreut,
c) Thixotropiermittel unter Rühren eingestreut,
d) mindestens 25 Minuten mit hohen Scherkräften dispergiert und dabei eine Temperatur von 50 °C bis 60 °C gehalten,
e) mindestens 5 Minuten homogen dispergiert und die gewünschte Viskosität durch Zugabe von Lösungsmittel oder Lösungsmittelmischungen eingestellt wird.

### Beispiel 1 (Vergleich)

27 Gewichtsteile Exolit® AP 422
10 Gewichtsteile Pliolite® AC 80
6 Gewichtsteile Chlorparaffin
8 Gewichtsteile Melamin
8 Gewichtsteile Pentaerythrit
ad 100 Gewichtsteile Hilfs- und Zusatzmittel, Verdicker, Dispergieradditive und Lösungsmittel gemäß Tabelle 1.

### Beispiel 2

27 Gewichtsteile Exolit® AP 422
16 Gewichtsteile Piccolyte® A125
8 Gewichtsteile Melamin
8 Gewichtsteile Pentaerythrit
ad 100 Gewichtsteile Hilfs- und Zusatzmittel, Verdicker, Dispergieradditive und Lösungsmittel gemäß Tabelle 1.

### Beispiel 3

27 Gewichtsteile Exolit® AP 422
12 Gewichtsteile Piccolyte® A125
8 Gewichtsteile Melamin
8 Gewichtsteile Pentaerythrit
ad 100 Gewichtsteile Hilfs- und Zusatzmittel, Verdicker, Dispergieradditive und Lösungsmittel gemäß Tabelle 1.

### Beispiel 4

27 Gewichtsteile Exolit® AP 422
20 Gewichtsteile Piccolyte® A125
8 Gewichtsteile Melamin
8 Gewichtsteile Pentaerythrit
ad 100 Gewichtsteile Hilfs- und Zusatzmittel, Verdicker, Dispergieradditive und Lösungsmittel gemäß Tabelle 1.

### Beispiel 5

27 Gewichtsteile Exolit® AP 422
10 Gewichtsteile Piccolyte® A125
6 Gewichtsteile Piccolyte® C125
8 Gewichtsteile Melamin
8 Gewichtsteile Pentaerythrit
ad 100 Gewichtsteile Hilfs- und Zusatzmittel, Verdicker, Dispergieradditive und Lösungsmittel gemäß Tabelle 1.

### Beispiel 6

27 Gewichtsteile Exolit® AP 422
10 Gewichtsteile Piccolyte® A125
6 Gewichtsteile Piccolyte® S125
8 Gewichtsteile Melamin
8 Gewichtsteile Pentaerythrit
ad 100 Gewichtsteile Hilfs- und Zusatzmittel, Verdicker, Dispergieradditive und Lösungsmittel gemäß Tabelle 1.

### Beispiel 7

27 Gewichtsteile Exolit® AP 422
10 Gewichtsteile Piccolyte® A125
6 Gewichtsteile Pliolite® AC 80
8 Gewichtsteile Melamin
8 Gewichtsteile Pentaerythrit
ad 100 Gewichtsteile Hilfs- und Zusatzmittel, Verdicker, Dispergieradditive und Lösungsmittel gemäß Tabelle 1.

**Tabelle 1**

| Beispiel | Mengen und typfilmbildendes Bindemittel (Terpen/Polyterpen) (Chlorparaffin) | Treibmittel | schaumbildende Substanz (APP) | kohlenstoffbildende Substanz (Kohlenhydrate) | Hilfs- und Zusatzstoffe | Verdicker | Dispergieradditive | Lösungsmittelmischung aus 75 Gwt. Xylol, 20 Gwt. Shellsol 100/140 5 Gwt. Methylethylketon |
|---|---|---|---|---|---|---|---|---|
| | | (Melamin/ MPP) | | | | | | |
| | Gew.-Teile | | | | | | | |
| 1 (V) | 10 Pliolite AC80 | 8 Melamin | 27 AP422 | 8 Pentaerythrit | 8 Titandioxid | 0,8 Luvotix® PA 20 XA | 0,2 Disperbyk® 2163 | 32 |
| | 6 Chlorparaffin | | | | | | | |
| 2 | 16 Piccolyte A125 | 8 Melamin | 27 AP422 | 8 Pentaerythrit | 8 Titandioxid | 0,8 Luvotix® PA 20 XA | 0,2 Disperbyk® 2163 | 32 |
| 3 | 12 Piccolyte A125 | 8 Melamin | 27 AP422 | 8 Pentaerythrit | 8 Titandioxid | 0,8 Luvotix® PA 20 XA | 0,2 Disperbyk® 2163 | 36 |
| 4 | 20 Piccolyte A125 | 8 Melamin | 27 AP422 | 8 Pentaerythrit | 8 Titandioxid | 0,8 Luvotix® PA 20 XA | 0,2 Disperbyk® 2163 | 28 |
| 5 | 10 Piccolyte A125 | 8 Melamin | 27 AP422 | 8 Pentaerythrit | 8 Titandioxid | 0,8 Luvotix® PA 20 XA | 0,2 Disperbyk® 2163 | 32 |
| | 6 Piccolyte C 125 | | | | | | | |
| 6 | 10 Piccolyte A125 | 8 Melamin | 27 AP422 | 8 Pentaerythrit | 8 Titandioxid | 0,8 Luvotix® PA 20 XA | 0,2 Disperbyk® 2163 | 32 |
| | 6 Piccolyte S 125 | | | | | | | |
| 7 | 10 Piccolyte A125 | 8 Melamin | 27 AP422 | 8 Pentaerythrit | 8 Titandioxid | 0,8 Luvotix® PA 20 XA | 0,2 Disperbyk® 2163 | 32 |
| | 6 Pliolite AC80 | | | | | | | |

| | | | | | | | | |
|---|---|---|---|---|---|---|---|---|
| (V) = Vergleich Gwt. = Gewichtsteile | | | | | | | | |

### Beispiel 8

22 Gewichtsteile Exolit® AP 422
20 Gewichtsteile Piccolyte® A125
10 Gewichtsteile Melamin
8 Gewichtsteile Pentaerythrit
ad 100 Gewichtsteile Hilfs- und Zusatzmittel, Verdicker, Dispergieradditive und Lösungsmittel gemäß Tabelle 2.

### Beispiel 9

20 Gewichtsteile Exolit® AP 422
10 Gewichtsteile Sylvares TR 90
12 Gewichtsteile Melamin
10 Gewichtsteile Pentaerythrit
ad 100 Gewichtsteile Hilfs- und Zusatzmittel, Verdicker, Dispergieradditive und Lösungsmittel gemäß Tabelle 2.

### Beispiel 10

30 Gewichtsteile Exolit® AP 422
25 Gewichtsteile Sylvares TR 90
10 Gewichtsteile Melamin
10 Gewichtsteile Pentaerythrit
   ad 100 Gewichtsteile Hilfs- und Zusatzmittel, Verdicker, Dispergieradditive und
Lösungsmittel gemäß Tabelle 2.

### Beispiel 11

25 Gewichtsteile Exolit® AP 422
12 Gewichtsteile Sylvares TR 105
8 Gewichtsteile Melamin
8 Gewichtsteile Pentaerythrit
ad 100 Gewichtsteile Hilfs- und Zusatzmittel, Verdicker, Dispergieradditive und Lösungsmittel gemäß Tabelle 2.

### Beispiel 12

25 Gewichtsteile Exolit® AP 422
14 Gewichtsteile Sylvares TR 105
8 Gewichtsteile Melamin
10 Gewichtsteile Pentaerythrit
ad 100 Gewichtsteile Hilfs- und Zusatzmittel, Verdicker, Dispergieradditive und Lösungsmittel gemäß Tabelle 2.

### Beispiel 13

25 Gewichtsteile Exolit® AP 422
16 Gewichtsteile Sylvares TR B 115
10 Gewichtsteile Melamin
8 Gewichtsteile Pentaerythrit
ad 100 Gewichtsteile Hilfs- und Zusatzmittel, Verdicker, Dispergieradditive und Lösungsmittel gemäß Tabelle 2.

### Beispiel 14

28 Gewichtsteile Exolit® AP 422
10 Gewichtsteile Sylvares TR 1100
7 Gewichtsteile Melamin
8 Gewichtsteile Pentaerythrit
ad 100 Gewichtsteile Hilfs- und Zusatzmittel, Verdicker, Dispergieradditive und Lösungsmittel gemäß Tabelle 2.

### Beispiel 15

24 Gewichtsteile Exolit® AP 422
16 Gewichtsteile Sylvares TR 7115
10 Gewichtsteile Melamin
10 Gewichtsteile Pentaerythrit
ad 100 Gewichtsteile Hilfs- und Zusatzmittel, Verdicker, Dispergieradditive und Lösungsmittel gemäß Tabelle 2.

**Tabelle 2**

| Beispiel | Mengen und typfilmbildendes Bindemittel (Terpen/Polyterpen) (Chlorparaffin) | Treibmittel | schaumbildende Substanz (APP) | kohlenstoffbildende Substanz (Kohlenhydrate) | Hilfs- und Zusatzstoffe | Verdicker | Dispergieradditive | Lösungsmittelmischung aus 75 Gwt. Xylol, 20 Gwt. Shellsol 100/140 5 Gwt. Methylethylketon |
|---|---|---|---|---|---|---|---|---|
| | | (Melamin/ MPP) | | | | | | |
| | Gew.-Teile | | | | | | | |
| 8 | 20 Piccolyte A125 | 10 Melamin | 22 AP422 | 8 Pentaerythrit | 8 Titandioxid | 0,8 Luvotix® PA 20 XA | 0,2 Disperbyk® 2163 | 31 |
| 9 | 10 Sylvares TR 90 | 12 Melamin | 30 AP422 | 10 Pentaerythrit | 10 Titandioxid | 0,8 Luvotix® PA 20 XA | 0,2 Disperbyk® 2163 | 27 |
| 10 | 25 Sylvares TR 90 | 10 Melamin | 20 AP422 | 10 Pentaerythrit | 8 Titandioxid | 0,8 Luvotix® PA 20 XA | 0,2 Disperbyk® 2163 | 26 |
| 11 | 12 Sylvares TR 90 | 8 Melamin | 25 AP422 | 8 Pentaerythrit | 8 Titandioxid | 0,8 Luvotix® PA 20 XA | 0,2 Disperbyk® 2163 | 38 |
| 12 | 14 Sylvares TR 90 | 8 Melamin | 25 AP422 | 10 Pentaerythrit | 9 Titandioxid | 0,8 Luvotix® PA 20 XA | 0,2 Disperbyk® 2163 | 32 |
| 13 | 16 Sylvares TR 90 | 10 Melamin | 25 AP422 | 8 Pentaerythrit | 10 Titandioxid | 0,8 Luvotix® PA 20 XA | 0,2 Disperbyk® 2163 | 30 |
| 14 | 10 Sylvares TR 90 | 7 Melamin | 28 AP422 | 8 Pentaerythrit | 8 Titandioxid | 0,8 Luvotix® PA 20 XA | 0,2 Disperbyk® 2163 | 38 |
| 15 | 16 Sylvares TR 90 | 10 Melamin | 24 AP422 | 10 Pentaerythrit | 7 Titandioxid | 0,8 Luvotix® PA 20 XA | 0,2 Disperbyk® 2163 | 32 |

| | | | | | | | | |
|---|---|---|---|---|---|---|---|---|
| Gwt. = Gewichtsteile | | | | | | | | |

Die so hergestellte Intumeszenzformulierung wurde als
Intumenszenzbeschichtung auf eine gestrahlte Stahlplatten SA 2,5 (280 x 280 x 5 mm) aufgetragen und eine Brandprüfung nach DIN 4102 Teil 8, Brandkurve ISO 834 (ETK) mit einer Trockenfilmdicke von 1000 µm durchgeführt. Es ergaben sich die in der Tabelle 3 dargestellten Feuerwiderstandszeiten (T_{kritisch} = 500 °C).

Die erfindungsgemäßen Intumeszensformulierungen unter Verwendung von Polyterpenharzen sind daher hervorragend zur Herstellung von wirksamen Intumeszenzbeschichtungen geeignet.

**Tabelle 3**

| Intumeszensformulierung aus | Filmbildendes Bindemittel | | | |
|---|---|---|---|---|
| | Pliolite AC 80 [Gew.-%] | Piccolyte A 125 / / C 125 / S 125 | Expansion x-fach | T_{kritisch} = 500 °C [min.] |
| Beispiel 1 | 10 | 0 / 0 / 0 | 35 | 55 |
| Beispiel 2 | 0 | 16 / 0 / 0 | 60 | 76 |
| Beispiel 3 | 0 | 12 / 0 / 0 | 45 | 62 |
| Beispiel 4 | 0 | 20 / 0 / 0 | 80 | 43 |
| Beispiel 5 | 0 | 10 / 6 / 0 | 65 | 70 |
| Beispiel 6 | 0 | 10 / 0 / 6 | 80 | 83 |
| Beispiel 7 | 6 | 10 / 0 / 0 | 40 | 47 |

Zur Ausprüfung der Wasserstabilität wird die so erhaltene
Brandschutzbeschichtung auf ein Aluminiumblech (70 x 150 x 0,8 mm) aufgetragen (die Schichtdicke vor Trocknung beträgt 1 mm) und anschließend für 24 h bei 26 °C getrocknet. Danach wird das Blech zur Hälfte längsseits für weitere 24 h in ein Wasserbad getaucht und anschließend die Blasenbildung an der Oberfläche optisch beurteilt. Die Auswertung erfolgt fotografisch / computergestützt.

Tabelle 4 gibt den Anteil der durch Blasenbildung betroffenen in Wasser eingetauchten Oberfläche in % wieder. Je größer die betroffene Oberfläche ist, desto geringer ist die Wasserstabilität. Dies ist insbesondere für Anwendungen im Außenbereich wichtig. Wird die Beschichtung der Feuchtigkeit und der Witterung allgemein ausgesetzt, ist eine gute und andauernde Oberflächenstabilität von essentieller Bedeutung, um die Glätte des Auftrags und seine Haltbarkeit zu gewährleisten.

**Tabelle 4**

| Intumeszensformulierung aus | Filmbildendes Bindemittel | | |
|---|---|---|---|
| | Pliolite AC 80 [Gew.-%] | Piccolyte A 125 / / C 125 / S 125 | Betroffene Oberfläche in % |
| Beispiel 1 | 10 | 0 / 0 / 0 | 35 |
| Beispiel 2 | 0 | 16 / 0 / 0 | 52 |
| Beispiel 3 | 0 | 12 / 0 / 0 | 68 |
| Beispiel 4 | 0 | 20 / 0 / 0 | 42 |
| Beispiel 5 | 0 | 10 / 6 / 0 | 50 |
| Beispiel 6 | 0 | 10 / 0 / 6 | 38 |
| Beispiel 7 | 6 | 10 / 0 / 0 | 76 |

Wird in einigen der Beispiele 1 bis 16 die schaumbildende Substanz Exolit® AP 422 gegen Exolit® AP 462 ausgetauscht, werden bei ansonsten gleicher Gesamtzusammensetzung analoge Ergebnisse bei den Feuerwiderstandszeiten und bei der Ausprüfung auf Blasenbildung erhalten.

Die nachfolgenden Beispiele 16 bis 20 beschreiben den Einfluss auf die Trockenzeit bei Änderung des Lösungsmittelsystems.

### Beispiel 16

27 Gewichtsteile Exolit® AP 422
16 Gewichtsteile Piccolyte® A125
8 Gewichtsteile Melamin
8 Gewichtsteile Pentaerythrit
8 Gewichtsteile Titandioxid
30 Gewichtsteile Mischung aus Xylol und Shellsol® 100/140 (Tabelle 3)
ad 100 Gewichtsteile Verdicker (Luvotix® PA 20 XA), Hilfs- und Zusatzmittel (Fasern und Füllstoffe), Dispergieradditive, Lösungsmittel (Methylethylketon (MEK)).

### Beispiel 17

27 Gewichtsteile Exolit® AP 422
16 Gewichtsteile Piccolyte® A125
8 Gewichtsteile Melamin
8 Gewichtsteile Pentaerythrit
8 Gewichtsteile Titandioxid
30 Gewichtsteile Mischung aus Xylol, Shellsol® 100/140 und 2-Propanol (Tabelle 3)
ad 100 Gewichtsteile Verdicker (Plioway® EC-T), Hilfs- und Zusatzmittel (Fasern und Füllstoffe), Dispergieradditive, Lösungsmittel (Methylethylketon (MEK)).

### Beispiel 18

27 Gewichtsteile Exolit® AP 422
16 Gewichtsteile Piccolyte® A125
8 Gewichtsteile Melamin
8 Gewichtsteile Pentaerythrit
8 Gewichtsteile Titandioxid
30 Gewichtsteile Mischung aus Xylol, Shellsol® 100/140 und 2-Propanol (Tabelle 3)
ad 100 Gewichtsteile Verdicker (Luvotix® PA 20 XA), Hilfs- und Zusatzmittel (Fasern und Füllstoffe), Dispergieradditive, Lösungsmittel (Methylethylketon (MEK)).

### Beispiel 19

27 Gewichtsteile Exolit® AP 422
16 Gewichtsteile Piccolyte® A125
8 Gewichtsteile Melamin
8 Gewichtsteile Pentaerythrit
8 Gewichtsteile Titandioxid
30 Gewichtsteile Mischung aus Xylol, Shellsol® 100/140 und 2-Propanol (Tabelle 3)
ad 100 Gewichtsteile Verdicker (Luvotix® PA 20 XA), Hilfs- und Zusatzmittel (Fasern und Füllstoffe), Dispergieradditive, Lösungsmittel (Methylethylketon (MEK)).

### Beispiel 20

27 Gewichtsteile Exolit® AP 422
16 Gewichtsteile Piccolyte® A125
8 Gewichtsteile Melamin
8 Gewichtsteile Pentaerythrit
8 Gewichtsteile Titandioxid
30 Gewichtsteile Mischung aus Xylol, Shellsol® 100/140 und 2-Propanol (Tabelle 3)
ad 100 Gewichtsteile Verdicker (Luvotix® PA 20 XA), Hilfs- und Zusatzmittel (Fasern und Füllstoffe), Dispergieradditive, Lösungsmittel (Methylethylketon (MEK)).

Die Trocknungsgeschwindigkeit der erfindungsgemäßen
Intumeszensbeschichtung kann durch anteiligen Austausch des Lösungsmittels Xylol gegen 2-Propanol stark erhöht werden. Als Trocknungszeit wird die Zeit definiert, bei der Gewichtskonstanz über einen Zeitraum von 3 Tagen herrscht und die Nagelprobe keine Markierung in der Beschichtungsoberfläche zeigt.

Tabelle 5 zeigt den Einfluss des 2-Propanol-Gehaltes auf die Trocknungsgeschwindigkeit einer 2000 µm Beschichtung auf einer Stahlplatte bei Raumtemperatur. Mit steigendem 2-Propanol-Gehalt nimmt die Trockenzeit kontinuierlich ab.

**Tabelle 5**

| Intumeszensformulierung aus | Lösungsm ittelsystem | | | |
|---|---|---|---|---|
| | Xylol | Shellsol 100/140 | 2-Propanol | Trockenzeit bei RT TSD = 2000 µm |
| | [Gew.-%] | [Gew.-%] | [Gew.-%] | [Tage] |
| Beispiel 16 | 50 | 50 | 0 | 46 |
| Beispiel 17 | 25 | 50 | 25 | 38 |
| Beispiel 18 | 15 | 50 | 35 | 32 |
| Beispiel 19 | 10 | 50 | 40 | 24 |
| Beispiel 20 | 5,0 | 47,5 | 47,5 | 20 |

Es wird abschließend noch einmal darauf hingewiesen, dass es sich bei den vorhergehenden detaillierten Zusammensetzungen und Beschichtungen lediglich um bevorzugte Ausführungsbeispiele handelt, welche vom Fachmann in verschiedenster Weise modifiziert werden können, ohne den Bereich der Erfindung zu verlassen, soweit er durch die Ansprüche vorgegeben ist. Insbesondere können andere Konzentrationen der jeweiligen Komponenten verwendet werden, solange die Verbindung eine ausreichende Brandschutzeignung aufweist.

Mit den erfindungsgemäßen Intumeszenszusammensetzungen konnte einen Absenkung der Starttemperatur der Intumeszensreaktion bis herab auf 220 °C beobachtet werden (nachgewiesen thermogravimetrischen Analysen (TGA)), so dass im Brandfall der schützende Brandschutzschaum früher, d. h. bei relativ niedrigen Feuertemperaturen entstehen kann und somit ein Schaden schneller verhindert wird.

## Patentansprüche

1. Halogenfreie, dämmschichtbildende Brandschutzbeschichtung, **dadurch gekennzeichnet, dass**
5 bis 69,7 Gew.-% filmbildendes Bindemittel auf Basis von Terpenen und/oder Polyterpenen,
5 bis 25 Gew.-% Melamin, Guanidin, deren Salze, Melaminkondensationsprodukte und/oder Dicyandiamide als Treibmittel,
5 bis 40 Gew.-% Ammoniumsalze von Phosphorsäuren und/oder Polyphosphorsäuren als schaumbildende Substanz,
5 bis 25 Gew.-% Kohlenhydrate als kohlenstoffbildende Substanz,
5 bis 40 Gew.-% Glasfasern, Mineralfasern, Kaolin, Talkum, Aluminiumoxid, Aluminiumhydroxid, Magnesiumhydroxid, Fällungskieselsäuren, Silikate und/oder pulverisierte Cellulosen als Hilfs- und Zusatzstoffe,
0,2 bis 10 Gew.-% Verdicker,
0,1 bis 10 Gew.-% Dispergieradditive und
10 bis 40 Gew.-% Lösungsmittel und/oder Lösungsmittelgemische enthält, wobei die Summe der Komponenten 100 Gew.-% beträgt.

2. Brandschutzbeschichtung nach Anspruch 1, **dadurch gekennzeichnet, dass** es sich bei den Terpenen um Terpene an sich handelt oder um Mischungen von Terpenen mit anderen Substanzen, wie Terpen-Phenol-Harze, Terpen-Kohlenwasserstoffharze, vinylaromatische Terpen-Harze, Kolophoniumharze und deren Ester handelt.

3. Brandschutzbeschichtung nach Anspruch 1, **dadurch gekennzeichnet, dass** es sich bei den Polyterpenen um synthetische und/oder natürliche Polyterpene, um Polyterpenharze, um Rosinester-Harze, ganz oder teil-hydrierte Rosinester-Harze, maleinisierte Derivate von Rosinesterharzen, disproportionierte Derivate, Abietinester und/oder modifizierte Naturharze handelt.

4. Brandschutzbeschichtung nach einem oder mehreren der Ansprüche 1 bis 3, **dadurch gekennzeichnet, dass** das filmbildende Bindemittel weiterhin mindestens ein Kohlenwasserstoffharz, ein vinylaromatisch modifiziertes Kohlenwasserstoffharz, modifizierte Terpen-Harze, Terpen-Co- oder Terpolymere, Styrol-Terpene, α-Methyl-Styrol-Terpene, Phenol-modifizierte Terpen-Harze sowie hydrierte Derivate davon, Styrol-Harze, Phenol-modifizierte α-Methyl-Styrol-Harze, Acrylsäure-Copolymerisate, Styrol-Acrylsäure-Copolymere, und aromatische, aliphatische oder cycloaliphatische Kohlenwasserstoffharze vom Typ C₅, C₉, C₉/C₁₀ sowie deren modifizierte oder hydrierte Derivate enthält.

5. Brandschutzbeschichtung nach einem oder mehreren der Ansprüche 1 bis 4, **dadurch gekennzeichnet, dass** die Polyterpene aus α-Pinen, β-Pinen, Limonen, Dipenten, α-Phellandren, β-Phellandren, δ-3-Caren und/oder δ-2-Caren, aTerpinen, β-Terpinen, Gamma-Terpinen, Sylvestren, α-Terpinolen, Psilimonen, Isolimonen, 1-Menthen, cis-2-Menthen, trans-2-Menthen, 3-Menthen, 4(8)-p-Menthene oder Mischungen davon, aus ungesättigten zyklischen und/oder ungesättigten linearen Terpen, entstammen.

6. Brandschutzbeschichtung nach Anspruch 5, **dadurch gekennzeichnet, dass** es sich bei den ungesättigten zyklischen Terpenen um Camphen, Tricyclen, Cadinen, Caryophyllen und/oder Bornylen und bei den gesättigten linearen Terpenen um Allo-Ocimen, Citronellen, Pseudocitronellen, Ocimen und/oder Mycren handelt.

7. Brandschutzbeschichtung nach einem oder mehreren der Ansprüche 1 bis 6, **dadurch gekennzeichnet, dass** die Polyterpenharze mindestens einen Rest aus der Gruppe α-Pinen, β-Pinen, Limonen, Dipenten, α-Phellandren, β-Phellandren, δ-3-Caren, δ-2-Caren, α-Terpinen, β-Terpinen, Gamma-Terpinen, Sylvestren, α-Terpinolen, Psilimonen, Isolimonen, 1-Menthen, cis-2-Menthen, trans-2-Menthen, 3-Menthen, 4(8)-p-Menthen, Camphen, Tricyclen, Cadinen, Caryophyllen, Bornylen, Allo-Ocimen, Citronellen, Pseudocitronellen, Ocimen und/oder Mycren enthalten.

8. Brandschutzbeschichtung nach einem oder mehreren der Ansprüche 1 bis 7, **dadurch gekennzeichnet, dass** die Polyterpenharze weiterhin mindestens einen monomeren Rest aus der Gruppe Isobutylen, 1-Alken, 2-Alken, trisubstituiertes Alken, Vinylcyclohexen, Piperylen, Isopren, 2-Methyl-2-buten, 2-Methyl-1-buten, Cyclopenten, acyclisches Penten, Cyclopentadien und/oder Dicyclopentadien enthalten.

9. Brandschutzbeschichtung nach einem oder mehreren der Ansprüche 1 bis 8, **dadurch gekennzeichnet, dass** die Terpen-Phenol-Harze mindestens einen monomeren Rest aus der Gruppe aus α-Pinen, β-Pinen, δ-3-Caren und/oder Limonen und mindestens einen monomeren Rest aus der Gruppe Styren, Inden, α-Methylstyren, aromatisches Alkylstyren, Divinylbenzen, Divinylbenzen mit einer oder mehr Alkylgruppen, Isobutylen, Diisobutylen, 1-Alken, 2-Alken, trisubstituiertes Alken, Vinylcyclohexen, Piperylen, Isopren, 2-Methyl-2-buten, 2-Methyl-1-buten, Cyclopenten, acyclisches Penten, Cyclopentadien und/oder Dicyclopentadien enthalten und es sich bei dem Phenol um Phenol selbst, mono-, di- und/oder trisubstituiertes Phenol und/oder eine hydroxylsubstituierte Naphthalinverbindung handelt.

10. Brandschutzbeschichtung nach einem oder mehreren der Ansprüche 1 bis 9, **dadurch gekennzeichnet, dass** es sich bei den Terpen-Kohlenwasserstoff-harzen um α-Pinen, β-Pinen und/oder Delta-Limonen handelt.

11. Brandschutzbeschichtung nach einem oder mehreren der Ansprüche 1 bis 10, **dadurch gekennzeichnet, dass** es sich bei den vinylaromatisch modifizierten Kohlenwasserstoffharzen um Phenylethen (Cinnamol) handelt.

12. Brandschutzbeschichtung nach einem oder mehreren der Ansprüche 1 bis 11, **dadurch gekennzeichnet, dass** sie filmbildende Bindemittel, Treibmittel, im Brandfall schaumschichtbildende und kohlenstoffbildende Substanzen sowie Hilfs- und Zusatzstoffe, Verdicker, Dispergieradditive und Lösungsmittel enthält.

13. Brandschutzbeschichtung nach einem oder mehreren der Ansprüche 1 bis 12, **dadurch gekennzeichnet, dass** das filmbildende Bindemittel weiterhin ein organisches Polymerharz enthält, wobei es sich hierbei um Copolymerisate auf Basis Styrol und Acrylsäureester, um Copolymerisate auf Basis Acrylsäureester, um Vinyltoluol/Acrylat-Copolymer, um Styrol/Acrylat-Polymer, um Homopolymerisate auf Basis Vinylacetat, um
Copolymerisate auf Basis Vinylacetat, Ethylen und Vinylchlorid, um Copolymerisate auf Basis Vinylacetat und dem Vinylester einer langkettigen, verzweigten Carbonsäure, um Copolymerisate auf Basis Vinylacetat und Maleinsäure-di-n-Butylester und/oder Acrylsäureester, um Vinyl/Acrylat-Copolymer, um selbstvernetzende Polyurethan-Dispersionen und/oder Mischungen davon handelt.

14. Brandschutzbeschichtung nach einem oder mehreren der Ansprüche 1 bis 13, **dadurch gekennzeichnet, dass** es sich bei den Treibmitteln um Melaminphoshat, Dimelaminphosphat, Pentamelamintriphosphat, Trimelamindiphosphat, Tetrakismelamintriphosphat, Hexakismelaminpentaphosphat, Melamindiphosphat, Melamintetraphosphat, Melaminpyrophosphat, Melaminpolyphosphate, Melampolyphosphate, Melempolyphosphate, Melonpolyphosphate, Melamincyanurat, Melaminborat, Melaminsilikat, Melam, Melem, Melon, Guanidinphosphat, oligomere Ester des Tris(hydroxyethyl)isocyanurats mit aromatischen Polycarbonsäuren, Benzoguanamin, Tris(hydroxyethyl)-isocyanurat, Allantoin, Glycouril, und/oder Harnstoffcyanurat handelt.

15. Brandschutzbeschichtung nach einem oder mehreren der Ansprüche 1 bis 14, **dadurch gekennzeichnet, dass** es sich bei den schaumbildenden Substanzen um stickstoffhaltige Phosphate (Ammoniumpolyphosphate) der Formeln (NH₄)_{y}H_{3-y}PO₄ bzw. (NH₄PO₃)_{z}, mit y gleich 1 bis 3 und z gleich 1 bis 10.000 handelt.

16. Brandschutzbeschichtung nach Anspruch 15, **dadurch gekennzeichnet, dass** das Ammoniumpolyphosphat eine Kristallform der Phase I, II, III, IV, V oder VI oder Mischungen davon aufweist.

17. Brandschutzbeschichtung nach einem oder mehreren der Ansprüche 1 bis 16, **dadurch gekennzeichnet, dass** das Ammoniumpolyphosphat mit organofunktionellen Silanen, Melamin-Formaldehydharzen, sowie Emulsionen auf Basis von (Meth)-acrylatharzen, von Styrol/Acrylate Copolymeren, Urethanen, von Ethylen/Vinylacetate Copolymeren, von Gummi oder Mischungen davon mikroverkapselt ist.

18. Brandschutzbeschichtung nach einem oder mehreren der Ansprüche 1 bis 17, **dadurch gekennzeichnet, dass** als Kohlenhydrate Pentaerythrit, Dipentaerythrit, Tripentaerythrit und/oder Polykondensate des Pentaerythrits eingesetzt werden.

19. Brandschutzbeschichtung nach einem oder mehreren der Ansprüche 1 bis 18, **dadurch gekennzeichnet, dass** sie
8 bis 51,4 Gew.-% filmbildendes Bindemittel,
6 bis 20 Gew.-% Treibmittel,
15 bis 35 Gew.-% schaumbildende Substanz,
6 bis 20 Gew.-% kohlenstoffbildende Substanz,
5 bis 20 Gew.-% Hilfs- und Zusatzstoffe,
0,5 bis 8 Gew.-% Verdicker,
0,1 bis 8 Gew.-% Dispergieradditive und
14 bis 40 Gew.-% Lösungsmittel und/oder Lösungsmittelgemische enthält, wobei die Summe der Komponenten 100 Gew.-% beträgt.

20. Brandschutzbeschichtung nach einem oder mehreren der Ansprüche 1 bis 19, **dadurch gekennzeichnet, dass** sie
10 bis 36,1 Gew.-% filmbildendes Bindemittel,
7 bis 12 Gew.-% Treibmittel,
20 bis 30 Gew.-% schaumbildende Substanz,
8 bis 10 Gew.-% kohlenstoffbildende Substanz,
7 bis 10 Gew.-% Hilfs- und Zusatzstoffe,
0,8 bis 3 Gew.-% Verdicker,
0,1 bis 5 Gew.-% Dispergieradditive und
21 bis 35 Gew.-% Lösungsmittel und/oder Lösungsmittelgemische enthält, wobei die Summe der Komponenten 100 Gew.-% beträgt.

21. Verwendung einer Brandschutzbeschichtung nach einem oder mehreren der Ansprüche 1 bis 20 zum Beschichten von Stahlkonstruktionen wie Stahlträgern und -Stützen, Decken, Wände, Kabel, Rohre, Leitungskanäle, Kabel- und Kombischotts, Türen, Vorhänge, Rauchschürzen, Jalousien, Sicherheitsschränke, Installationsschränke und anderen.

22. Verwendung einer Brandschutzbeschichtung nach einem oder mehreren der Ansprüche 1 bis 20 auf Stahl, Holz, Holzwerkstoffen, Papier, Mineralwolle, Gipskarton, Kunststoffen, Metallen, Legierungen, Geweben aus synthetischen oder natürlichen Fasern und anderen geeigneten Materialien und/oder als Lötstopplack und für elektrische Schaltungen und Schaltkreise.

## Claims

1. Halogen-free, insulation layer-forming fire protection coating, **characterized in that** contains
5% to 69.7% by weight of film-forming binder based on terpenes and/or polyterpenes,
5% to 25% by weight of melamine, guanidine, salts thereof, melamine condensation products and/or dicyanodiamides as blowing agent,
5% to 40% by weight of ammonium salts of phosphoric acids and/or polyphosphoric acids as foam-forming substance,
5% to 25% by weight of carbohydrates as carbon-forming substance,
5% to 40% by weight of glass fibers, mineral fibers, kaolin, talc, aluminum oxide, aluminum hydroxide, magnesium hydroxide, precipitated silicas, silicates and/or pulverized celluloses as assistant and additive substances,
0.2% to 10% by weight of thickener,
0.1% to 10% by weight of dispersing additives and
10% to 40% by weight of solvent and/or solvent mixtures, wherein the components sum to 100% by weight.

2. Fire protection coating according to Claim 1, **characterized in that** the terpenes are terpenes as such or mixtures of terpenes with other substances, such as terpene-phenol resins, terpene-hydrocarbon resins, vinylaromatic terpene resins, colophony resins and esters thereof.

3. Fire protection coating according to Claim 1, **characterized in that** the polyterpenes are synthetic and/or natural polyterpenes, polyterpene resins, rosin ester resins, fully or partially hydrogenated rosin ester resins, maleated derivatives of rosin ester resins, disproportionated derivatives, abietic esters and/or modified natural resins.

4. Fire protection coating according to one or more of Claims 1 to 3, **characterized in that** the film-forming binder further contains at least a hydrocarbon resin, a vinylaromatically modified hydrocarbon resin, modified terpene resins, terpene co- or terpolymers, styrene-terpenes, α-methylstyrene terpenes, phenol-modified terpene resins and hydrogenated derivatives thereof, styrene resins, phenol-modified α-methylstyrene resins, acrylic acid copolymers, styrene-acrylic acid copolymers, and aromatic, aliphatic or cycloaliphatic hydrocarbon resins of the C₅, C₉, C₉/C₁₀ type and modified or hydrogenated derivatives thereof.

5. Fire protection coating according to one or more of Claims 1 to 4, **characterized in that** the polyterpenes derive from α-pinene, β-pinene, limonene, dipentene, α-phellandrene, β-phellandrene, δ-3-carene and/or δ-2-carene, α-terpinene, β-terpinene, gamma-terpinene, sylvestrene, α-terpinolene, psilimonene, isolimonene, 1-menthene, cis-2-menthene, trans-2-menthene, 3-menthene, 4(8)-p-menthenes or mixtures thereof, from unsaturated cyclic and/or unsaturated linear terpenes.

6. Fire protection coating according to Claim 5, **characterized in that** the unsaturated cyclic terpenes are camphene, tricyclene, cadinene, caryophyllene and/or bornylene and the saturated linear terpenes are alloocimene, citronellene, pseudocitronellene, ocimene and/or mycrene.

7. Fire protection coating according to one or more of Claims 1 to 6, **characterized in that** the polyterpene resins contain at least one radical from the group of α-pinene, β-pinene, limonene, dipentene, α-phellandrene, β-phellandrene, δ-3-carene, δ-2-carene, α-terpinene, β-terpinene, gamma-terpinene, sylvestrene, α-terpinolene, psilimonene, isolimonene, 1-menthene, cis-2-menthene, trans-2-menthene, 3-menthene, 4(8)-p-menthene, camphene, tricyclene, cadinene, caryophyllene, bornylene, alloocimene, citronellene, pseudocitronellene, ocimene and/or mycrene.

8. Fire protection coating according to one or more of Claims 1 to 7, **characterized in that** the polyterpene resins further contain at least one monomeric radical from the group of isobutylene, 1-alkene, 2-alkene, trisubstituted alkene, vinylcyclohexene, piperylene, isoprene, 2-methyl-2-butene, 2-methyl-1-butene, cyclopentene, acyclic pentene, cyclopentadiene and/or dicyclopentadiene.

9. Fire protection coating according to one or more of Claims 1 to 8, **characterized in that** the terpene-phenol resins contain at least one monomeric radical from the group of α-pinene, β-pinene, δ-3-carene and/or limonene and at least one monomeric radical from the group of styrene, indene, α-methylstyrene, aromatic alkylstyrene, divinylbenzene, divinylbenzene having one or more alkyl groups, isobutylene, diisobutylene, 1-alkene, 2-alkene, trisubstituted alkene, vinylcyclohexene, piperylene, isoprene, 2-methyl-2-butene, 2-methyl-1-butene, cyclopentene, acyclic pentene, cyclopentadiene and/or dicyclopentadiene and the phenol is phenol itself, mono-, di- and/or trisubstituted phenol and/or a hydroxyl-substituted naphthalene compound.

10. Fire protection coating according to one or more of Claims 1 to 9, **characterized in that** the terpene-hydrocarbon resins are α-pinene, β-pinene and/or delta-limonene.

11. Fire protection coating according to one or more of Claims 1 to 10, **characterized in that** the vinylaromatically modified hydrocarbon resins are phenylethene (cinnamol).

12. Fire protection coating according to one or more of Claims 1 to 11, **characterized in that** it contains film-forming binders, blowing agents, substances which are foam layer-forming and carbon-forming in the event of fire and also assistant and additive substances, thickeners, dispersing additives and solvents.

13. Fire protection coating according to one or more of Claims 1 to 12, **characterized in that** the film-forming binder further contains an organic polymer resin which is selected from copolymers based on styrene and acrylic esters, from copolymers based on acrylic esters, from vinyltoluene/acrylate copolymer, from styrene/acrylate polymer, from homopolymers based on vinyl acetate, from
copolymers based on vinyl acetate, ethylene and vinyl chloride, from copolymers based on vinyl acetate and the vinyl ester of a long-chain, branched carboxylic acid, from copolymers based on vinyl acetate and di-n-butyl maleic esters and/or acrylic esters, from vinyl/acrylate copolymer, from self-crosslinking polyurethane dispersions and/or mixtures thereof.

14. Fire protection coating according to one or more of Claims 1 to 13, **characterized in that** the blowing agents are melamine phoshate, dimelamine phosphate, pentamelamine triphosphate, trimelamine diphosphate, tetrakismelamine triphosphate, hexakismelamine pentaphosphate, melamine diphosphate, melamine tetraphosphate, melamine pyrophosphate, melamine polyphosphates, melam polyphosphates, melem polyphosphates, melon polyphosphates, melamine cyanurate, melamine borate, melamine silicate, melam, melem, melon, guanidine phosphate, oligomeric esters of tris(hydroxyethyl) isocyanurate with aromatic polycarboxylic acids, benzoguanamine, tris(hydroxyethyl) isocyanurate, allantoin, glycouril, and/or urea cyanurate.

15. Fire protection coating according to one or more of Claims 1 to 14, **characterized in that** the foam-forming substances are nitrogen-containing phosphates (ammonium polyphosphates) of formulae (NH₄)_{y}H_{3-y}PO₄/(NH₄PO₃)_{z} where y is 1 to 3 and z is 1 to 10 000.

16. Fire protection coating according to Claim 15, **characterized in that** the ammonium polyphosphate has a crystal form of phase I, II, III, IV, V or VI or mixtures thereof.

17. Fire protection coating according to one or more of Claims 1 to 16, **characterized in that** the ammonium polyphosphate is microencapsulated with organofunctional silanes, melamine-formaldehyde resins and emulsions based on (meth)acrylate resins, on styrene/acrylate copolymers, urethanes, on ethylene/vinyl acetate copolymers, on rubber or mixtures thereof.

18. Fire protection coating according to one or more of Claims 1 to 17, **characterized in that** pentaerythritol, dipentaerythritol, tripentaerythritol and/or polycondensates of pentaerythritol are employed as carbohydrates.

19. Fire protection coating according to one or more of Claims 1 to 18, **characterized in that** it contains
8% to 51.4% by weight of film-forming binder,
6% to 20% by weight of blowing agent,
15% to 35% by weight of foam-forming substance,
6% to 20% by weight of carbon-forming substance,
5% to 20% by weight of assistant and additive substances,
0.5% to 8% by weight of thickener,
0.1% to 8% by weight of dispersing additives and
14% to 40% by weight of solvent and/or solvent mixtures, wherein the components sum to 100% by weight.

20. Fire protection coating according to one or more of Claims 1 to 19, **characterized in that** it contains
10% to 36.1% by weight of film-forming binder,
7% to 12% by weight of blowing agent,
20% to 30% by weight of foam-forming substance,
8% to 10% by weight of carbon-forming substance,
7% to 10% by weight of assistant and additive substances,
0.8% to 3% by weight of thickener,
0.1% to 5% by weight of dispersing additives and
21% to 35% by weight of solvent and/or solvent mixtures, wherein the components sum to 100% by weight.

21. Use of a fire protection coating according to one or more of Claims 1 to 20 for coating steel constructions such as steel beams and supports, ceilings, walls, cables, pipes, conduits, cable and combination bulkheads, doors, curtains, smoke barriers, blinds, safety cabinets, installation cabinets and the like.

22. Use of a fire protection coating according to one or more of Claims 1 to 20 on steel, wood, wood-based materials, paper, mineral wool, plasterboard, plastics, metals, alloys, fabrics made of synthetic or natural fibers and other suitable materials and/or as solder mask and for electrical switches and circuits.

## Revendications

1. Revêtement ignifuge, exempt d'halogène, formant couche isolante, **caractérisé en ce qu'**il contient 5 à 69,7 % en poids d'un liant filmogène à base de terpènes et/ou de polyterpènes,
5 à 25 % en poids de mélamine, de guanidine, de leurs sels, de produits de condensation de mélamine et/ou de dicyandiamide en tant qu'agent gonflant,
5 à 40 % en poids de sels d'ammonium d'acides phosphoriques et/ou d'acides polyphosphoriques en tant que substance formant de la mousse,
5 à 25 % en poids d'hydrates de carbone en tant que substance formant du carbone,
5 à 40 % en poids de fibres de verre, de fibres minérales, de kaolin, de talc, d'oxyde d'aluminium, d'hydroxyde d'aluminium, d'hydroxyde de magnésium, de silices précipitées, de silicates et/ou de celluloses pulvérisées en tant que qu'auxiliaires et additifs,
0,2 à 10 % en poids d'épaississant,
0,1 à 10 % en poids d'additifs dispersants et
10 à 40 % en poids d'un solvant et/ou de mélanges de solvants, la somme des composants étant de 100 % en poids.

2. Revêtement ignifuge selon la revendication 1, **caractérisé en ce que** les terpènes sont des terpènes en tant que tels ou des mélanges de terpènes avec des autres substances, comme des résines de terpène-phénol, des résines de terpène-hydrocarbure, des résines de terpène-vinylaromatique, des résines de colophane et leurs esters.

3. Revêtement ignifuge selon la revendication 1, **caractérisé en ce que** les polyterpènes sont des polyterpènes synthétiques et/ou naturels, des résines de polyterpène, des résines d'ester de rosine, des résines d'ester de rosine totalement ou partiellement hydrogénées, des dérivés maléinisés de résines d'ester de rosine, des dérivés disproportionnés, des esters d'abiétine et/ou des résines naturelles modifiées.

4. Revêtement ignifuge selon l'une quelconque ou plusieurs des revendications 1 à 3, **caractérisé en ce que** le liant filmogène contient en outre au moins une résine d'hydrocarbure, une résine d'hydrocarbure modifiée de manière vinylaromatique, des résines de terpènes modifiées, des copolymères ou terpolymères de terpènes, des styrène-terpènes, des α-méthylstyrène-terpènes, des résines de terpènes modifiées par un phénol ainsi que des dérivés hydrogénés correspondants, des résines de styrène, des résines d'α-méthylstyrène modifiées par un phénol, des copolymérisats d'acide acrylique, des copolymères de styrène-acide acrylique, et des résines d'hydrocarbures aromatiques, aliphatiques ou cycloaliphatiques du type C₅, C₉, C₉/C₁₀ ainsi que leurs dérivés modifiés ou hydrogénés.

5. Revêtement ignifuge selon l'une quelconque ou plusieurs des revendications 1 à 4, **caractérisé en ce que** les polyterpènes proviennent de l'α-pinène, du β-pinène, du limonène, du dipentène, de l'α-phellandrène, du β-phellandrène, du δ-3-carène et/ou du δ-2-carène, de l'α-terpinène, du β-terpinène, du gamma-terpinène, du sylvestrène, de l'α-terpinolène, du psilimonène, de l'isolimonène, du 1-menthène, du cis-2-menthène, du trans-2-menthène, du 3-menthène, du 4(8)-p-menthène ou de mélanges correspondants, de terpènes cycliques insaturés et/ou linéaires insaturés.

6. Revêtement ignifuge selon la revendication 5, **caractérisé en ce que** les terpènes cycliques insaturés sont le camphène, le tricyclène, le cadinène, le caryophyllène et/ou le bornylène et les terpènes linéaires saturés sont l'allo-ocimène, le citronellène, le pseudocitronellène, l'ocimène et/ou le mycrène.

7. Revêtement ignifuge selon l'une quelconque ou plusieurs des revendications 1 à 6, **caractérisé en ce que** les résines de polyterpène contiennent au moins un radical du groupe de l'α-pinène, du β-pinène, du limonène, du dipentène, de l'α-phellandrène, du β-phellandrène, du δ-3-carène et/ou du δ-2-carène, de l'α-terpinène, du β-terpinène, du gamma-terpinène, du sylvestrène, de l'α-terpinolène, du psilimonène, de l'isolimonène, du 1-menthène, du cis-2-menthène, du trans-2-menthène, du 3-menthène, du 4(8)-p-menthène, du camphène, du tricyclène, du cadinène, du caryophyllène, du bornylène, de l'allo-ocimène, du citronellène, du pseudocitronellène, de l'ocimène et/ou du mycrène.

8. Revêtement ignifuge selon l'une quelconque ou plusieurs des revendications 1 à 7, **caractérisé en ce que** les résines de polyterpène contiennent en outre au moins un radical monomérique du groupe de l'isobutylène, d'un 1-alcène, d'un 2-alcène, d'un alcène trisubstitué, d'un vinyle cyclohexène, du pipérylène, de l'isoprène, du 2-méthyl-2-butène, du 2-méthyl-1-butène, du cyclopentène, d'un pentène acyclique, du cyclopentadiène et/ou du dicyclopentadiène.

9. Revêtement ignifuge selon l'une quelconque ou plusieurs des revendications 1 à 8, **caractérisé en ce que** les résines de terpène-phénol contiennent au moins un radical monomérique du groupe de l'α-pinène, du β-pinène, du δ-3-carène et/ou du limonène et au moins un radical monomérique du groupe du styrène, de l'indène, de l'α-méthylstyrène, d'un alkylstyrène aromatique, d'un divinylbenzène, d'un divinylbenzène doté d'un ou plusieurs groupes alkyle, de l'isobutylène, du diisobutylène, d'un 1-alcène, d'un 2-alcène, d'un alcène trisubstitué, d'un vinyle cyclohexène, du pipérylène, de l'isoprène, du 2-méthyl-2-butène, du 2-méthyl-1-butène, du cyclopentène, d'un pentène acyclique, du cyclopentadiène et/ou du dicyclopentadiène et le phénol est le phénol lui-même, un phénol monosubstitué, un phénol disubstitué et/ou un phénol trisubstitué et/ou un composé du naphtalène substitué par hydroxyle.

10. Revêtement ignifuge selon l'une quelconque ou plusieurs des revendications 1 à 9, **caractérisé en ce que** les résines de terpène-hydrocarbure sont à l'α-pinène, au β-pinène et/ou au delta-limonène.

11. Revêtement ignifuge selon l'une quelconque ou plusieurs des revendications 1 à 10, **caractérisé en ce que** les résines d'hydrocarbure modifiées de manière vinylaromatique sont au phényléthène (cinnamol).

12. Revêtement ignifuge selon l'une quelconque ou plusieurs des revendications 1 à 11, **caractérisé en ce qu'**il contient des liants filmogènes, des agents gonflants, des substances formant des couches de mousse et formant du carbone lors d'un incendie ainsi que des auxiliaires et des additifs, des épaississants, des additifs dispersants et des solvants.

13. Revêtement ignifuge selon l'une quelconque ou plusieurs des revendications 1 à 12, **caractérisé en ce que** le liant filmogène contient en outre une résine de polymère organique, dans lequel il s'agit ici de copolymérisats à base de styrène et d'un ester d'acide acrylique, de copolymérisats à base d'un ester d'acide acrylique, d'un copolymère de vinyltoluène/acrylate, d'un polymère de styrène/acrylate, d'homopolymérisats à base d'acétate de vinyle, de copolymérisats à base d'acétate de vinyle, d'éthylène et de chlorure de vinyle, de copolymérisats à base d'acétate de vinyle et de l'ester de vinyle d'un acide carboxylique ramifié, à chaîne longue, de copolymérisats à base d'acétate de vinyle et du diester de n-butyle de l'acide maléique et/ou d'un ester d'acide acrylique, d'un copolymère de vinyle/acrylate, de dispersions de polyuréthane auto-réticulantes et/ou de mélanges correspondants.

14. Revêtement ignifuge selon l'une quelconque ou plusieurs des revendications 1 à 13, **caractérisé en ce que** les agents gonflants sont du phosphate de mélamine, du phosphate de dimélamine, du triphosphate de pentamélamine, du diphosphate de trimélamine, du triphosphate de tétrakismélamine, du pentaphosphate d'hexakismélamine, du diphosphate de mélamine, du tétraphosphate de mélamine, du pyrophosphate de mélamine, des polyphosphates de mélamine, des polyphosphates de mélam, des polyphosphates de mélem, des polyphosphates de melon, du cyanurate de mélamine, du borate de mélamine, du silicate de mélamine, du mélam, du mélem, du melon, du phosphate de guanidine, des esters oligomériques de l'isocyanurate de tris(hydroxyéthyle) avec des acides polycarboxyliques aromatiques, de la benzoguanamine, de l'isocyanurate de tris(hydroxyéthyle), de l'allantoïne, du glycolurile, et/ou du cyanurate d'urée.

15. Revêtement ignifuge selon l'une quelconque ou plusieurs des revendications 1 à 14, **caractérisé en ce que** les substances formant de la mousse sont des phosphates contenant de l'azote (polyphosphates d'ammonium) de formule (NH₄)_{y}H_{3-y}PO₄ ou (NH₄PO₃)_{z}, avec y valant 1 à 3 et z valant 1 à 10 000.

16. Revêtement ignifuge selon la revendication 15, **caractérisé en ce que** le polyphosphate d'ammonium présente une forme cristalline de la phase I, II, III, IV, V ou VI ou des mélanges correspondants.

17. Revêtement ignifuge selon l'une quelconque ou plusieurs des revendications 1 à 16, **caractérisé en ce que** le polyphosphate d'ammonium est microencapsulé avec des silanes organofonctionnels, des résines de mélamine-formaldéhyde, ainsi que des émulsions à base de résines de (méth)acrylate, de copolymères de styrène/acrylate, d'uréthanes, de copolymères d'éthylène/acétate de vinyle, de caoutchouc ou de mélanges correspondants.

18. Revêtement ignifuge selon l'une quelconque ou plusieurs des revendications 1 à 17, **caractérisé en ce que** le pentaérythritol, le dipentaérythritol, le tripentaérythritol et/ou des polycondensats du pentaérythritol sont utilisés en tant qu'hydrates de carbone.

19. Revêtement ignifuge selon l'une quelconque ou plusieurs des revendications 1 à 18, **caractérisé en ce qu'**il contient
8 à 51,4 % en poids de liant filmogène,
6 à 20 % en poids d'agent gonflant,
15 à 35 % en poids de substance formant de la mousse,
6 à 20 % en poids de substance formant du carbone,
5 à 20 % en poids d'auxiliaires et d'additifs,
0,5 à 8 % en poids d'épaississant,
0,1 à 8 % en poids d'additifs dispersants et
14 à 40 % en poids d'un solvant ou de mélanges de solvants, la somme des composants étant de 100 % en poids.

20. Revêtement ignifuge selon l'une quelconque ou plusieurs des revendications 1 à 19, **caractérisé en ce qu'**il contient
10 à 36,1 % en poids de liant filmogène,
7 à 12 % en poids d'agent gonflant,
20 à 30 % en poids de substance formant de la mousse,
8 à 10 % en poids de substance formant du carbone,
7 à 10 % en poids d'auxiliaires et d'additifs,
0,8 à 3 % en poids d'épaississant,
0,1 à 5 % en poids d'additifs dispersants et
21 à 35 % en poids d'un solvant ou de mélanges de solvants, la somme des composants étant de 100 % en poids.

21. Utilisation d'un revêtement ignifuge selon l'une quelconque ou plusieurs des revendications 1 à 20 pour le revêtement de constructions d'acier comme des poutres d'acier et des poteaux d'acier, des couvertures, des parois, des câbles, des tubes, des canalisations, des cloisons de câble et des cloisons combinées, des portes, des rideaux, des rideaux anti-fumée, des jalousies, des armoires de sécurité, des armoires d'installation et autres.

22. Utilisation d'un revêtement ignifuge selon l'une quelconque ou plusieurs des revendications 1 à 20 sur de l'acier, du bois, des matériaux en bois, du papier, de la laine minérale, des plaques de plâtre, des plastiques, des métaux, des alliages, des tissus composés de fibres synthétiques ou naturelles et d'autres matériaux appropriés et/ou en tant que masquage pour la soudure et pour des commutateurs et des circuits électriques.
